# FASCICULE DE BREVET EUROPEEN

(11) **EP 2 171 319 B1**
(45) Date de publication et mention de la délivrance du brevet: **24.08.2016**
(21) Numéro de dépôt: 08827016.0
(22) Date de dépôt: 27.06.2008
(51) Int. Cl.: F16C 33/66, F16C 33/78, F16J 15/324, F16J 15/3264, F16J 15/34

(54) **PALIER À ROULEMENT ET JOINT D'ÉTANCHÉITÉ À COMPORTEMENT DYNAMIQUE AMÉLIORÉ**
KUGELLAGER UND DICHTUNG MIT VERBESSERTEM DYNAMISCHEM VERHALTEN
ROLLER BEARING AND SEALING JOINT WITH IMPROVED DYNAMIC BEHAVIOUR

(30) Priorité: 29.06.2007 FR 0704724
(43) Date de publication de la demande: 07.04.2010
(73) Titulaire: SNR Roulements, 74000 Annecy (FR)
(72) Inventeur: CHAUDIER, Bernard, F-74600 Seynod (FR); RUHLAND, Siegfried, F-74540 Saint Sylvestre (FR)
(74) Mandataire: Sayettat, Julien Christian
(86) Numéro de dépôt international: PCT/FR2008/000924
(87) Numéro de publication internationale: WO 2009/019341

(56) Documents cités:
- EP-A- 1 424 496
- WO-A-2006/064908
- DE-A1- 10 152 586
- FR-A- 2 735 768

## Description

L'invention concerne un palier à roulement dont au moins un côté de l'espace de roulement est équipé d'un joint d'étanchéité, ainsi qu'un joint d'étanchéité pour un tel palier à roulement.

En particulier, l'invention s'applique pour étanchéifier au moins un côté de l'espace de roulement de paliers à roulement de véhicule automobile, notamment de paliers de roue.

Pour empêcher d'une part les fuites du lubrifiant présent dans l'espace de roulement et, d'autre part la contamination dudit espace avec des polluants extérieurs, on connaît l'utilisation de joints d'étanchéité comprenant un élément d'étanchéité souple qui est associé à une armature rigide d'association au palier.

En particulier, l'élément souple peut présenter une lèvre extérieure et une lèvre intérieure définissant entre elles un logement annulaire dans lequel un lubrifiant est disposé. Ainsi, en mettant en contact frottant les lèvres solidaires d'un organe du palier sur des portées solidaires d'un autre organe dudit palier, il est possible d'assurer l'étanchéité souhaitée tout en limitant le couple induit par le frottement des lèvres. Le document WO-2006/064908 décrit un palier selon le préambule de la revendication 1 et un joint selon le préambule de la revendication 5.

Dans les applications envisagées, les contraintes d'étanchéité sont sévères, notamment relativement aux environnements auxquels les joints sont soumis, ce qui oblige à augmenter le couple exercé par les lèvres sur les portées de contact.

Toutefois, outre l'impact négatif sur l'énergie nécessaire à la rotation du palier, un couple important provoque une usure prématurée des lèvres, notamment sous l'effet de l'augmentation de température induit.

Il existe donc encore un besoin pour améliorer le comportement dynamique des lèvres d'étanchéité sur les portées de contact, de sorte, en optimisant la relation entre l'étanchéité conférée et le couple induit, à limiter l'usure desdites lèvres.

A cet effet, et selon un premier aspect, l'invention propose un palier à roulement selon la revendication 1.

Selon un deuxième aspect, l'invention propose un joint d'étanchéité selon la revendication 5.

D'autres objets et avantages de l'invention apparaîtront dans la description qui suit, faite en référence aux figures annexées dans lesquelles :
- la figure 1 est une vue partielle en coupe longitudinale d'un joint d'étanchéité selon un mode de réalisation de l'invention ;
- la figure 2 est une représentation d'un marquage d'une portée extérieure selon un mode de réalisation de l'invention.

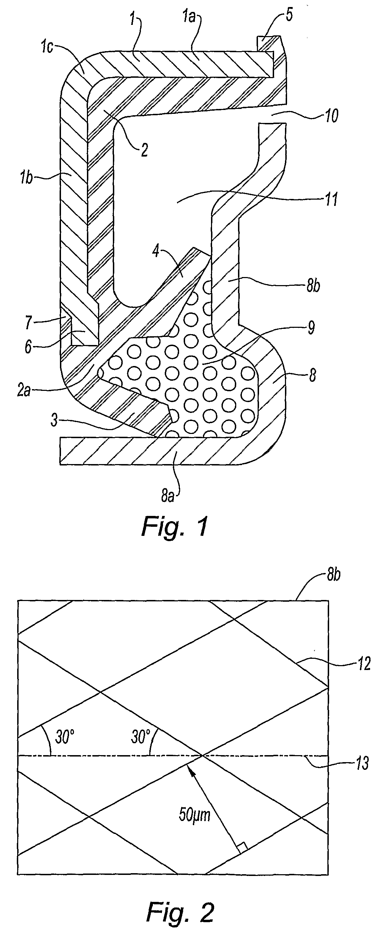

En relation avec la figure 1, on décrit un joint d'étanchéité pour palier à roulement, notamment pour un palier ou un roulement de roue de véhicule automobile.

Le palier comprend un organe fixe, un organe tournant et des corps roulants disposés dans un espace de roulement formé entre lesdits organes pour permettre leur rotation relative.

Pour étanchéifier un côté de l'espace de roulement, le palier est équipé d'un joint d'étanchéité qui comprend une armature 1 annulaire rigide d'association audit palier de sorte à rendre ladite armature solidaire en rotation d'un organe dudit palier. En particulier, l'armature 1 peut être réalisée en matériau métallique, notamment en tôle emboutie. Selon une réalisation, chaque côté de l'espace de roulement peut être étanchéifié par respectivement un joint d'étanchéité.

Dans le mode de réalisation représenté, l'armature 1 comprend une portée axiale 1 a et une portée radiale 1 b qui sont liées par un congé de raccordement 1 c. Ainsi, la portée axiale 1 a forme moyen d'association par emmanchement sur une portée correspondante qui est formée sur l'un des organes du palier.

Le joint d'étanchéité comprend en outre, associé à l'armature 1, un élément d'étanchéité souple 2 qui peut être réalisé en matériau élastomère, notamment un copolymère butadiène nitrile (NBR), éventuellement renforcé mécaniquement par des charges telles que du noir de carbone, en NBR hydrogéné (HNBR), en fluoropolymère ou en polyacrylate. En particulier, l'élément d'étanchéité 2 peut être associé par surmoulage sur au moins une partie de la face interne de la portée radiale 1 b. Sur la figure, l'élément d'étanchéité 2 est associé sur toute la face interne de l'armature 1.

Pour assurer l'étanchéité, l'élément d'étanchéité 2 présente une lèvre extérieure 4 et une lèvre intérieure 3 qui, lors de la rotation du palier, sont en contact frottant sur une portée respectivement extérieure et intérieure qui sont solidaires de l'autre organe du palier. Pour limiter le couple induit, les lèvres 3, 4 sont agencées de sorte à définir entre elles un logement annulaire dans lequel un lubrifiant 9, par exemple une graisse, est disposé.

Selon une première réalisation non représentée, les portées de contact sont réalisées sur l'organe du palier à l'opposé de l'organe sur lequel l'armature 1 est associée. Par exemple, la lèvre extérieure 4 peut être en contact frontal sur la portée extérieure et la lèvre intérieure 3 peut être en contact radial sur la portée intérieure.

Selon une deuxième réalisation, le joint d'étanchéité comprend en outre un déflecteur 8 solidaire de l'autre organe de sorte à former un espace annulaire d'étanchéité 11 entre ledit déflecteur et l'armature 1. Ainsi, l'élément d'étanchéité 2 est disposé dans l'espace annulaire 11 et les portées extérieure et intérieure sont formées sur ledit déflecteur. Ce type de joint d'étanchéité présente l'avantage d'être pré-monté et lubrifié avant son montage sur le palier.

Sur la figure 1, l'élément d'étanchéité 2 comprend une partie libre 2a qui s'étend au-delà de la portée radiale 1 b, ladite partie présentant une lèvre intérieure radiale 3. En outre, l'élément d'étanchéité 2 comprend une lèvre extérieure faciale 4 qui est prévue extérieurement relativement à la lèvre radiale 3. Dans un mode de réalisation non représenté, l'élément d'étanchéité 2 peut comprendre une troisième lèvre qui s'étend depuis la partie libre 2a et est orientée à l'opposé de la lèvre faciale 4, c'est-à-dire vers l'intérieur du roulement (à gauche sur la figure 1).

Par ailleurs, l'élément d'étanchéité 2 représenté présente un talon d'étanchéité statique 5 qui est destiné à protéger la zone d'emmanchement entre la portée axiale 1a et l'organe, ledit talon étant formé dans la continuité de la face interne de l'armature 1, c'est-à-dire sur l'extrémité libre de la portée axiale 1a. En variante, l'élément d'étanchéité 2 peut recouvrir la face externe de la portée radiale 1 b, le talon d'étanchéité étant alors formé au niveau du congé de raccordement 1 c.

Pour améliorer la fiabilité de l'association de l'élément d'étanchéité 2 sur l'armature 1, l'extrémité libre de la portée radiale 1b présente une zone 6 décalée axialement, l'association de la partie libre 2a de l'élément d'étanchéité 2 étant réalisée par une couronne 7 enrobant la face externe de ladite zone décalée. Dans le mode de réalisation représenté, la couronne 7 est disposée dans l'alignement de la face externe de la portée radiale 1b. En outre, la lèvre faciale 4 s'étend en regard de la zone décalée 6, à l'opposé de la couronne 7.

Le déflecteur 8 présente une portée axiale 8a qui est destinée à l'emmanchement dudit déflecteur sur l'organe opposé à celui sur lequel l'armature 1 est associée, et une portée radiale 8b. Dans cette réalisation, la lèvre extérieure 4 est en contact frontal sur la portée radiale 8b et la lèvre intérieure 3 est en contact radial sur la portée axiale 8a. Plus précisément, la lèvre extérieure 4 présente une partie extrême axi-radiale qui s'étend au-delà d'une partie de base sensiblement axiale. La partie axi-radiale est divergente par rapport au logement contenant le lubrifiant 9 et est en appui sur la portée radiale 8b de sorte à conférer une fonction de chicanage entre l'espace annulaire 11 et ledit logement.

Sur la figure 1, la portée radiale 8b présente une portion décalée axialement vers l'élément d'étanchéité 2, la lèvre extérieure 4 étant en contact frottant sur ladite portion formant portée extérieure.

Par ailleurs, une chicane 10 est formée entre le déflecteur 8 et l'armature 1, ladite chicane communiquant avec l'espace annulaire 11 du côté de la lèvre extérieure 4. Ainsi, l'élément d'étanchéité 2 est protégé des polluants extérieurs. En outre, dans le palier, une protection de l'élément d'étanchéité 2 peut être obtenue en montant le déflecteur 8 latéralement vers l'extérieur par rapport à l'armature 1.

En variante non représentée, et dans le cas où le déflecteur 8 est associé à l'organe tournant du palier, la face externe dudit déflecteur peut être pourvue d'un codeur de la rotation dudit organe, tel que notamment décrit dans le document EP-0 607 719.

La portée extérieure 8b présente une portance supérieure à 60%. Selon les normes ISO 4287 et 13565, la portance considérée est le taux de longueur portante Mr à mi hauteur totale du profil de la portée extérieure (Rt/2). D'après la norme ISO 4287, la hauteur totale Rt d'un profil est la somme de la plus grande des hauteurs de saillie du profil et de la plus grande des profondeurs de creux du profil à l'intérieur de la longueur d'évaluation.

La portance caractérise le profil et l'homogénéité des aspérités à la surface de la portée extérieure 8b. En outre, la rugosité de la portée extérieure 8b est supérieure à 0,5 µm, ce qui caractérise la taille des aspérités. Selon la norme ISO 4287, la rugosité considérée est la rugosité Ra qui est une moyenne arithmétique des valeurs absolues des ordonnées à l'intérieur d'une longueur de base.

Cette sélection de la portance et de la rugosité pour la portée extérieure 8b permet de limiter le couple exercé par la lèvre extérieure 4 sur ladite portée. Il en résulte un moindre échauffement de la lèvre extérieure 4, notamment de l'ordre de 10°C, et donc une meilleure résistance relativement à l'usure.

En outre, la lubrification obtenue présente un comportement hydrodynamique dans lequel un film de lubrifiant est formé au niveau du contact entre la lèvre 4 et la portée 8b. Par ailleurs, des essais ont montré que la lèvre extérieure 4 présente principalement une fonction de chicanage entre l'espace d'étanchéité 11 et le logement contenant le lubrifiant 9, de sorte qu'un contact intime d'étanchéité entre ladite lèvre et la portée 8b n'est pas décisif relativement à l'étanchéité conférée par le joint.

A contrario, la lèvre intérieure 3 présente une fonction d'étanchéité renforcée. Par conséquent, l'invention prévoit de conserver, pour la portée intérieure 8a, une rugosité réduite et une portance importante. En particulier, la portance et la rugosité de la portée intérieure 8a sont respectivement strictement supérieure et strictement inférieure à celles de la portée extérieure 8b. Selon une réalisation, la portance et la rugosité de la portée intérieure 8a sont celles de la tôle emboutie, par exemple de l'ordre de plus de 80% et de moins de 0,4 µm respectivement.

Selon une première réalisation, la portée extérieure 8b est traitée mécaniquement de sorte à ajuster son état de surface relativement à sa portance et à sa rugosité. Par exemple, le traitement mécanique peut comprendre un grenaillage ou un galetage. En variante, le traitement mécanique peut être réalisé lors de l'emboutissage de la tôle, notamment en prévoyant un poinçon ou une matrice ayant subit un sablage de sorte à être rugueux au niveau de la formation de la portée extérieure 8b. Ces réalisations permettent d'obtenir une rugosité comprise entre 0,5 µm et 0,7 µm, notamment de l'ordre de 0,55 µm, qui donne de bons résultats relativement aux tests d'étanchéité, de couple induit et d'usure de la lèvre extérieure 4.

Selon une deuxième réalisation, la portée extérieure 8b présente un marquage qui est agencé pour ajuster l'état de surface de ladite portée relativement à sa portance et à sa rugosité.

En particulier, le marquage peut être réalisé au moyen d'un faisceau laser qui présente l'avantage d'éviter une déformation du déflecteur 8, d'être particulièrement modulable relativement aux géométries de marquage réalisables et de ne pas nécessiter de nettoyage après sa mise en oeuvre. Ainsi, il est possible d'obtenir un état de surface optimal relativement à la création d'un film de lubrifiant au niveau du contact entre la lèvre extérieure 4 et la portée extérieure 8b.

En particulier, le marquage peut comprendre un réseau régulier de sillons rectilignes 12, notamment répartis symétriquement par rapport à l'axe de rotation 13 du joint, comme représenté sur la figure 2. Dans un exemple de réalisation :
- les sillons 12 s'entrecroisent suivant un angle compris entre 45° et 90°, notamment 30° sur la figure 2 ;
- la profondeur des sillons 12 est comprise entre 5 et 10 µm ;
- l'espacement des sillons 12 est compris entre 30 et 80 µm, notamment 50 µm sur la figure 2.

Par ailleurs, le marquage peut présenter une rugosité Ra de 1,2 µm pour une hauteur totale Rt de 8,7 µm. Pour augmenter le taux de portance au-delà de 60%, le marquage peut être poli, la hauteur totale Rt étant alors de l'ordre de 4 µm et la rugosité Ra de l'ordre de 1 µm après polissage.

## Revendications

1. Palier à roulement comprenant un organe fixe, un organe tournant et des corps roulants disposés dans un espace de roulement formé entre lesdits organes pour permettre leur rotation relative, au moins un côté de l'espace de roulement étant équipé d'un joint d'étanchéité comprenant un élément d'étanchéité (2) associé à une armature annulaire rigide (1) qui est solidaire d'un organe du palier, ledit élément d'étanchéité présentant une lèvre extérieure (4) et une lèvre intérieure (3) qui sont en contact frottant sur une portée respectivement extérieure (8b) et intérieure (8a) qui sont solidaires de l'autre organe du palier, ladite portée extérieure présentant une rugosité moyenne arithmétique Ra supérieure à 0,5 µm, lesdites lèvres étant agencées de sorte à définir entre elles un logement annulaire dans lequel un lubrifiant (9) est disposé, ledit palier étant **caractérisé en ce que** la portée extérieure (8b) présente une portance supérieure à 60% , la portance considérée étant le taux de longueur portante Mr à mi hauteur totale du profil de ladite portée extérieure, la portance et la rugosité moyenne arithmétique Ra de la portée intérieure (8a) étant respectivement strictement supérieure et strictement inférieure à celle de la portée extérieure (8b).

2. Palier à roulement selon la revendication 1, **caractérisé en ce que** la lèvre extérieure (4) est en contact frontal sur la portée extérieure (8b), la lèvre intérieure (3) étant en contact radial sur la portée intérieure (8a).

3. Palier à roulement selon la revendication 1 ou 2, **caractérisé en ce que** le joint d'étanchéité comprend en outre un déflecteur (8) solidaire de l'autre organe de sorte à former un espace annulaire d'étanchéité (11) entre ledit déflecteur et l'armature (1), l'élément d'étanchéité (2) étant disposé dans ledit espace et les portées extérieure (8b) et intérieure (8a) étant formées sur ledit déflecteur.

4. Palier à roulement selon la revendication 3, **caractérisé en ce que** le déflecteur (8) est monté latéralement vers l'extérieur du palier par rapport à l'armature (1).

5. Joint d'étanchéité pour palier à roulement selon la revendication 3 ou 4, ledit joint comprenant une armature (1) annulaire rigide d'association audit palier et un déflecteur (8) disposé en regard de ladite armature de sorte à former un espace annulaire d'étanchéité (11) entre eux, ledit joint comprenant en outre, associé à ladite armature et disposé dans ledit espace d'étanchéité, un élément d'étanchéité (2) présentant une lèvre extérieure (4) et une lèvre intérieure (3), lesdites lèvres étant en contact frottant sur une portée respectivement extérieure (8b) et intérieure (8a) du déflecteur (8) et sont agencées de sorte à définir entre elles un logement annulaire dans lequel un lubrifiant (9) est disposé, ladite portée extérieure présentant une rugosité moyenne arithmétique Ra supérieure à 0,5 µm, ledit joint étant **caractérisé en ce que** la portée extérieure (8b) présente une portance supérieure à 60% , la portance considérée étant le taux de longueur portante Mr à mi hauteur totale du profil de ladite portée extérieure, la portance et la rugosité moyenne arithmétique Ra de la portée intérieure (8a) étant respectivement strictement supérieure et strictement inférieure à celle de la portée extérieure (8b).

6. Joint d'étanchéité selon la revendication 5, **caractérisé en ce que** la portée extérieure (8b) a été traitée mécaniquement de sorte à ajuster son état de surface relativement à sa portance et à sa rugosité.

7. Joint d'étanchéité selon la revendication 5, **caractérisé en ce que** la portée extérieure (8b) présente un marquage qui est agencé pour ajuster l'état de surface de ladite portée relativement à sa portance et à sa rugosité.

8. Joint d'étanchéité selon la revendication 7, **caractérisé en ce que** le marquage comprend un réseau régulier de sillons rectilignes (12).

9. Joint d'étanchéité selon la revendication 8, **caractérisé en ce que** les sillons (12) sont répartis symétriquement par rapport à l'axe de rotation (13).

10. Joint d'étanchéité selon la revendication 8 ou 9, **caractérisé en ce que** les sillons (12) s'entrecroisent suivant un angle compris entre 45° et 90°, la profondeur des sillons (12) étant comprise entre 5 et 10 µm et l'espacement desdits sillons étant compris entre 30 et 80 µm.

11. Joint d'étanchéité selon l'une quelconque des revendications 7 à 10, **caractérisé en ce que** le marquage est poli de sorte à obtenir un taux de portance à mi hauteur totale du profil qui est supérieure à 60%.

12. Joint d'étanchéité selon l'une quelconque des revendications 5 à 11, **caractérisé en ce qu'**une chicane (10) est formée entre le déflecteur (8) et l'armature (1), ladite chicane communicant avec l'espace annulaire d'étanchéité (11) du côté de la lèvre extérieure (4).

13. Joint d'étanchéité selon l'une quelconque des revendications 5 à 12, **caractérisé en ce que** le déflecteur (8) présente une portée axiale (8a) d'association au palier et une portée radiale (8b), la lèvre extérieure (4) étant en contact frontal sur la portée radiale (8b) et la lèvre intérieure (3) étant en contact radial sur la portée axiale (8a).

14. Joint d'étanchéité selon la revendication 13, **caractérisé en ce que** la portée radiale (8b) présente une portion décalée axialement vers l'élément d'étanchéité (2), la lèvre extérieure (4) étant en contact frottant sur ladite portion formant portée extérieure.

## Patentansprüche

1. Wälzlager, ein feststehendes Organ, ein drehendes Organ und Rollkörper umfassend, die in einem Lagerraum angeordnet sind, der zwischen den besagten Organen gebildet wird, um deren Drehung zueinander zu ermöglichen, wobei zumindest eine Seite des Lagerraums mit einer Dichtung ausgestattet ist, ein Dichtelement (2) umfassend, das mit einer starren ringförmigen Armatur (1) verbunden ist, die fest mit einem Organ des Wälzlagers verbunden ist, wobei das besagte Dichtelement eine äußere Lippe (4) und eine innere Lippe (3) aufweist, die in Reibkontakt auf einer jeweils äußeren (8b) und inneren (8a) Auflagefläche sind, die fest mit dem anderen Organ des Wälzlagers verbunden sind, wobei die besagte äußere Auflagefläche eine durchschnittliche arithmetische Rauheit Ra von mehr als 0,5 µm aufweist, die besagten Lippen angeordnet sind, sodass sie zwischen sich eine ringförmige Aufnahme bilden, in der ein Schmiermittel (9) aufgebracht ist, wobei das besagte Wälzlager **dadurch gekennzeichnet ist, dass** die äußere Auflagefläche (8b) eine Tragfähigkeit von mehr als 60% aufweist, wobei die betrachtete Tragfähigkeit der Anteil der tragenden Länge Mr auf halber Gesamthöhe des Profils der besagten äußeren Auflagefläche ist, wobei die Tragfähigkeit und die durchschnittliche arithmetische Rauheit Ra der inneren Auflagefläche (8a) jeweils streng größer und streng kleiner ist, als jene der äußeren Auflagefläche (8b).

2. Wälzlager nach Anspruch 1, **dadurch gekennzeichnet, dass** die äußere Lippe (4) in frontalem Kontakt auf der äußeren Auflagefläche (8b) ist, wobei die innere Lippe (3) in radialem Kontakt auf der inneren Auflagefläche (8a) ist.

3. Wälzlager nach Anspruch 1 oder 2, **dadurch gekennzeichnet, dass** die Dichtung darüber hinaus einen Abweiser (8) umfasst, der fest mit dem anderen Organ verbunden ist, um einen ringförmigen Dichtraum (11) zwischen dem besagten Abweiser und der Armatur (1) zu bilden, wobei das Dichtelement (2) im besagten Raum angeordnet ist, und die äußere (8b) und die innere (8a) Auflageflächen auf dem besagten Abweiser gebildet werden.

4. Wälzlager nach Anspruch 3, **dadurch gekennzeichnet, dass** der Abweiser (8) seitlich zur Außenseite des Wälzlagers hin im Verhältnis zur Armatur (1) montiert ist.

5. Dichtung für ein Wälzlager nach Anspruch 3 oder 4, wobei die besagte Dichtung eine starre ringförmige Armatur (1) zur Verbindung mit dem besagten Wälzlager und einen Abweiser (8) umfasst, der gegenüber der besagten Armatur angeordnet ist, um einen ringförmigen Dichtraum (11) zwischen ihnen zu bilden, wobei die besagte Dichtung darüber hinaus, mit der besagten Armatur verbunden und im besagten Dichtraum angeordnet, ein Dichtelement (2) umfasst, das eine äußere Lippe (4) und eine innere Lippe (3) aufweist, wobei die besagten Lippen in Reibkontakt auf einer jeweils äußeren (8b) und inneren (8a) Auflagefläche des Abweisers (8) sind, und derart angeordnet sind, um zwischen sich eine ringförmige Aufnahme zu definieren, in der ein Schmiermittel (9) aufgebracht ist, wobei die besagte äußere Auflagefläche eine durchschnittliche arithmetische Rauheit Ra von mehr als 0,5 µm aufweist, wobei das besagte Wälzlager **dadurch gekennzeichnet ist, dass** die äußere Auflagefläche (8b) eine Tragfähigkeit von mehr als 60% aufweist, wobei die betrachtete Tragfähigkeit der Anteil der tragenden Länge Mr auf halber Gesamthöhe des Profils der besagten äußeren Auflagefläche ist, wobei die Tragfähigkeit und die durchschnittliche arithmetische Rauheit Ra der inneren Auflagefläche (8a) jeweils streng größer und streng kleiner als jene der äußeren Auflagefläche (8b).

6. Dichtung nach Anspruch 5, **dadurch gekennzeichnet, dass** die äußere Auflagefläche (8b) mechanisch behandelt wurde, um seine Oberflächenbeschaffenheit im Verhältnis zu seiner Tragfähigkeit und seiner Rauheit anzupassen.

7. Dichtung nach Anspruch 5, **dadurch gekennzeichnet, dass** die äußere Auflagefläche (8b) eine Markierung aufweist, die angeordnet ist, um die Oberflächenbeschaffenheit der besagten Auflagefläche im Verhältnis zu seiner Tragfähigkeit und seiner Rauheit anzupassen.

8. Dichtung nach Anspruch 7, **dadurch gekennzeichnet, dass** die Markierung ein regelmäßiges Netz an geradlinigen Rillen (12) umfasst.

9. Dichtung nach Anspruch 8, **dadurch gekennzeichnet, dass** die Rillen (12) im Verhältnis zur Drehachse (13) symmetrisch verteilt sind.

10. Dichtung nach Anspruch 8 oder 9, **dadurch gekennzeichnet, dass** sich die Rillen (12) gemäß einem Winkel zwischen 45° und 90° schneiden, wobei die Tiefe der Rillen (12) zwischen 5 und 10 µm enthalten ist, und der Abstand der besagten Rillen zwischen 30 und 80 µm enthalten ist.

11. Dichtung nach einem der Ansprüche 7 bis 10, **dadurch gekennzeichnet, dass** die Markierung poliert ist, um einen Tragfähigkeitsanteil auf halber Gesamthöhe des Profils zu erhalten der über 60% liegt.

12. Dichtung nach einem der Ansprüche 5 bis 11, **dadurch gekennzeichnet, dass** eine Schikane (10) zwischen dem Abweiser (8) und der Armatur (1) gebildet wird, wobei die besagte Schikane auf Seiten der äußeren Lippe (4) mit dem ringförmigen Dichtraum (11) verbunden ist.

13. Dichtung nach einem der Ansprüche 5 bis 12, **dadurch gekennzeichnet, dass** der Abweiser (8) eine axiale Auflagefläche (8a) zur Verbindung mit dem Wälzlager und eine radiale Auflagefläche (8b) aufweist, wobei die äußere Lippe (4) in frontalem Kontakt auf der äußeren Auflagefläche (8b) ist, und die innere Lippe (3) in radialem Kontakt auf der inneren Auflagefläche (8a) ist.

14. Dichtung nach Anspruch 13, **dadurch gekennzeichnet, dass** die radiale Auflagefläche (8b) einen axial zum Dichtelement (2) versetzten Abschnitt aufweist, wobei die äußere Lippe (4) in Reibkontakt auf dem besagten Abschnitt ist, der die äußere Auflagefläche bildet.

## Claims

1. Roller bearing comprising a fixed member, a rotating member and roller bodies arranged in a roller space formed between said members in order to allow for their relative rotation, at least one side of the roller space being equipped with a sealing joint comprising a sealing element (2) associated to a rigid annular armature (1) which is fixed to a bearing member, said sealing element having an outer lip (4) and an inner lip (3) which are in sliding contact on a surface respectively outer (8b) and inner (8a) which are fixed to the other bearing member, said outer surface having an arithmetic average roughness Ra greater than 0,5 µm, said lips being arranged in such a way as to define between them an annular housing wherein a lubricant (9) is arranged, said bearing being **characterised in that** the outer surface (8b) has a bearing capacity greater than 60%, the bearing capacity considered being the bearing length rate Mr at total mid-height of the profile of said outer surface, the bearing capacity and the arithmetic average roughness Ra of the inner surface (8a) being respectively strictly greater than and strictly less than that of the outer surface (8b) .

2. Roller bearing according to claim 1, **characterised in that** the outer lip (4) is in frontal contact on the outer surface (8b), the inner lip (3) being in radial contact on the inner surface (8a) .

3. Roller bearing according to claim 1 or 2, **characterised in that** the sealing joint further comprises a deflector (8) fixed to the other member in such a way as to form an annular sealing space (11) between said deflector and the armature (1), the sealing element (2) being arranged in said space and the outer (8b) and inner (8a) surfaces being formed on said deflector.

4. Roller bearing according to claim 3, **characterised in that** the deflector (8) is mounted laterally towards the exterior of the bearing in relation to the armature (1).

5. Sealing joint for roller bearing according to claim 3 or 4, said joint comprising a rigid annular armature (1) for associating to said bearing and a deflector (8) arranged across from said armature in such a way as to form an annular sealing space (11) between them, said joint further comprising, associated to said armature and arranged in said sealing space, a sealing element (2) having an outer lip (4) and an inner lip (3), said lips being in sliding contact on a surface respectively outer (8b) and inner (8a) of the deflector (8) and are arranged in such a way as to define between them an annular housing wherein a lubricant (9) is arranged, said outer surface having an arithmetic average roughness Ra greater than 0,5 µm, said joint being **characterised in that** the outer surface (8b) has a bearing capacity greater than 60%, the bearing capacity considered being the bearing length rate Mr at total mid-height of the profile of said outer surface, the bearing capacity and the arithmetic average roughness Ra of the inner surface (8a) being respectively strictly greater than and strictly less than that of the outer surface (8b).

6. Sealing joint according to claim 5, **characterised in that** the outer surface (8b) has been treated mechanically in such a way as to adjust its surface state relatively to its bearing capacity and to its roughness.

7. Sealing joint according to claim 5, **characterised in that** the outer surface (8b) has a marking which is arranged in order to adjust the surface state of said surface relatively to its bearing capacity and to its roughness.

8. Sealing joint according to claim 7, **characterised in that** the marking includes a regular network of straight grooves (12).

9. Sealing joint according to claim 8, **characterised in that** the grooves (12) are distributed symmetrically in relation to the axis of rotation (13).

10. Sealing joint according to claim 8 or 9, **characterised in that** the grooves (12) are interlaced according to an angle between 45° and 90°, the depth of the grooves (12) being between 5 and 10 µm and the spacing of said grooves being between 30 and 80 µm.

11. Sealing joint according to any of claims 7 to 10, **characterised in that** the marking is polished in such a way as to obtain a rate of bearing capacity at total mid-height of the profile which is greater than 60%.

12. Sealing joint according to any of claims 5 to 11, **characterised in that** a chicane (10) is formed between the deflector (8) and the armature (1), said chicane communicating with the annular sealing space (11) of the side of the outer lip (4).

13. Sealing joint according to any of claims 5 to 12, **characterised in that** the deflector (8) has an axial surface (8a) for associating to the bearing and a radial surface (8b), the outer lip (4) being in frontal contact on the radial surface (8b) and the inner lip (3) being in radial contact on the axial surface (8a).

14. Sealing joint according to claim 13, **characterised in that** the radial surface (8b) has an axially shifted portion towards the sealing element (2), the outer lip (4) being in sliding contact on said portion forming the outer surface.
